(19) Europäisches Patentamt
European Patent Office
Office européen des brevets

(11) EP 0 610 816 B1

(12) **EUROPÄISCHE PATENTSCHRIFT**

(45) Veröffentlichungstag und Bekanntmachung des Hinweises auf die Patenterteilung:
**29.12.1999 Patentblatt 1999/52**

(51) Int Cl.[6]: **C08J 5/18**, C08L 45/00

(21) Anmeldenummer: **94101640.4**

(22) Anmeldetag: **03.02.1994**

(54) **Steife Cycloolefincopolymer-Folie**

Rigid foil based on cyclo-olefin copolymer

Feuille rigide de copolymère cyclo-oléfine

(84) Benannte Vertragsstaaten:
**DE FR GB IT LU NL**

(30) Priorität: **12.02.1993 DE 4304308**

(43) Veröffentlichungstag der Anmeldung:
**17.08.1994 Patentblatt 1994/33**

(73) Patentinhaber: **Ticona GmbH**
**65451 Kelsterbach (DE)**

(72) Erfinder:
- **Bennett, Cynthia**
  **D-55232 Alzey (DE)**
- **Brekner, Michael-Joachim**
  **D-60529 Frankfurt (DE)**
- **Herrmann-Schönherr, Otto**
  **D-64625 Bensheim (DE)**
- **Osan, Frank**
  **D-65779 Kelkheim (DE)**

(56) Entgegenhaltungen:
**EP-A- 0 485 893**
**EP-A- 0 503 422**
**EP-A- 0 530 767**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 0 610 816 B1

## Beschreibung

Die Erfindung betrifft steife Folien aus Cycloolefincopolymeren, ein Verfahren zur Herstellung solcher Folien sowie deren Verwendung, insbesondere zur Herstellung von Tiefziehteilen.

Cycloolefincopolymere weisen folgende, speziell für Folien vorteilhafte Eigenschaften auf:

- hohe Transparenz (für optische Anwendungen)
- gute dielektrische Eigenschaften (als Kondensatordielektrikum)
- hohe Erweichungstemperaturen, insbesondere bei hohem Cycloolefingehalt (für Hochtemperaturanwendungen) und
- gute Gasbarriere (für Anwendungen auf dem Verpackungssektor).

Folien aus Cycloolefincopolymeren sind bekannt. Die DD-A 224 538 und DD-A 241 971 beschreiben Gießfolien aus Ethylen-Norbornen-Copolymeren.

Die EP-A 0 384 694 beschreibt ebenfalls Folien aus zyklischen Copolymeren. Außer den Norbornen-Copolymeren sind die dort erwähnten anderen cycloolefinischen Ausgangsmaterialien jedoch vergleichsweise teuer und damit unwirtschaftlich.

Ein Nachteil bei allen bisher bekannten Folien aus Cycloolefincopolymeren ist das für die Herstellung von Dünnstfolien noch zu geringe E-Modul, insbesondere das zu geringe Zug-E-Modul. Das E-Modul hat einen direkten Einfluß auf die Wickeleigenschaften einer Folie. Je kleiner das E-Modul, desto größer die Gefahr, daß beim Wickeln der Folie durch Zugspannungen irreversible Verdehnungen auftreten.

Es bestand also das Bedürfnis, zu steiferen Cycloolefincopolymer-Folien zu gelangen, die sich insbesondere als Dünnstfolie besser handhaben lassen und z.B. für die Verwendung als Kondensatordielektrikum geeignet sind. Ebenfalls bestand nach wie vor ein Bedürfnis nach Cycloolefincopolymer-Folien für steifere Tiefziehteile, z.B. für die Herstellung von dünneren Teilen bei gleicher Steifigkeit (Materialersparnis).

Es wurde nun gefunden, daß Cycloolefincopolymere mit einer speziellen Mikrostruktur die Herstellung von orientierten Cycloolefincopolymerfolien mit besonders hohem E-Modul erlauben. Die spezielle Mikrostruktur ist charakterisiert durch eine relativ hohe Stereotaktizität bezüglich der Cycloolefine. Die dadurch hervorgerufene, bevorzugte Konformation der Kette hindert das aneinander Vorbeigleiten von Ketten bei kleinen Dehnungen. Dies wiederum bewirkt eine höhere Steifigkeit (einen höheren E-Modul) als Materialeigenschaft.

Einige der zur Herstellung der erfindungsgemäßen Folien geeigneten Cycloolefincopolymere sind bereits in der EP-A 0 407 870, der EP-A-0 503 422 und in der DE-A 40 36 264 beschrieben. In diesen Schriften wird auch erwähnt, daß aus diesen Rohstoffen Folien hergestellt werden können. Jedoch umfassen diese Schriften auch solche Cycloolefincopolymere, die sich zur Herstellung erfindungsgemäßer Folien nicht eignen, da sie zu duktil sind und somit ein Optimum an E-Modul bei geringst möglicher Foliendicke nicht erreicht wird. Geeignete Maßnahmen zur Herstellung von Cycloolefincopolymeren mit der speziellen Mikrostruktur sind in diesen Schriften nicht beschrieben.

Unter der erfindungsgemäßen Steifigkeit wird im Folgenden verstanden, daß das zur Herstellung der Folie verwendete nicht orientierte Cycloolefincopolymer ein *intrinsisches* E-Modul besitzt, welches eine Abhängigkeit von der Glastemperatur ($T_g$) des Cycloolefincopolymeren gemäß:

$$E_i = (0{,}0025\ [GPa/°C] \times T_g\ [°C]) + B\ [GPa]$$

mit B = 2,93-3,19 aufweist.

Cycloolefincopolymere eignen sich nur dann zur Herstellung von erfindungsgemäßen Folien, wenn diese Polymere die oben genannte Bedingung erfüllen. Der $E_i$-Wert dient als ein möglicher Nachweis der erfindungsgemäß erforderlichen Mikrostruktur der Polymeren.

Ein weiterer Nachweis dieser Mikrostruktur ist das $^{13}C$-NMR-Spektrum. Das $^{13}C$-NMR-Spektrum des Cycloolefincopolymeren, das mindestens eine Schicht der erfindungsgemäßen Folie ausmacht, weist neben anderen Unterschieden einen charakteristischen Peak bei 40,8 ppm auf.

Die erfindungsgemäßen Folien enthalten mindestens eine Schicht, die überwiegend, d.h. zu mindestens 90 Gew.-%, bevorzugt mindestens 95 Gew.-% (bezogen auf das Gewicht dieser Schicht) aus einem Cycloolefincopolymeren aufgebaut ist, bestehend aus den Wiederholungseinheiten (I) und (II)

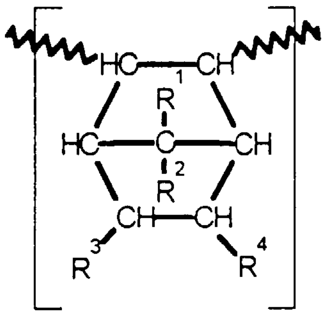

(I)

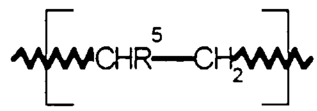

(II)

und gegebenenfalls (III) und/oder (IV) und/oder (V)

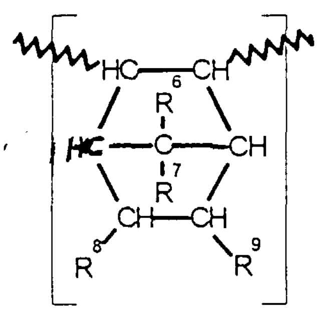

(III)

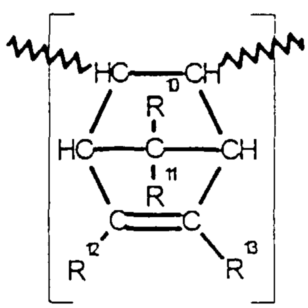

(IV)

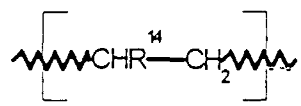

(V)

wobei (III) ungleich (I) ist,

| | |
|---|---|
| $R^1$ bis $R^5$ | gleich oder verschieden sind und H, Aryl, $C_1$ - $C_{10}$- Alkyl, $C_3$ - $C_{10}$-Cycloalkyl bedeuten und wobei |
| $R^6$ bis $R^{14}$ | gleich oder verschieden sind und die Bedeutung von $R^1$ bis $R^5$ haben oder $C_2$-$C_{10}$-Alkylen oder $C_3$-$C_{10}$-Cycloalkenyl bedeuten und wobei die Restepaare $R^6/R^7$, $R^8/R^9$, $R^{10}/R^{11}$ und/oder $R^{12}/R^{13}$ jeweils untereinander verbunden sind und zusammen mit den C-Atomen an denen sie gebunden sind einen $C_4$- $C_{10}$-Cycloalkyl- oder $C_4$ - $C_{10}$- Cycloalkenylrest darstellen, der seinerseits durch einen -C($R^1$,$R^2$)-Rest überbrückt sein kann, wobei $R^1$ und $R^2$ die oben für $R^1$ bis $R^5$ angegebenen Bedeutungen haben. |
| $R^1$, $R^2$,$R^3$, $R^4$ und $R^5$ | sind vorzugsweise H. |

In einer bevorzugten Ausführung der Erfindung werden Monomere verwendet, die mindestens zwei Doppelbindungen enthalten, d.h. mindestens einer der Reste $R^6$ bis $R^{14}$ ist ungesättigt. Durch geeigneter Wahl der Polymerisationsbedingungen (z.B. ausreichend lange Reaktionszeit zur Erzielung eines hohen Umsatzes) kann eine Langkettenverzweigung - durch den Einbau einer zweiten Doppelbindung in einer Seitenkette - bewirkt werden. Solche Polymere sind für die Herstellung von Blasfolien geeignet. Werden andererseits die Polymerisationsbedingungen so gewählt, daß unreagierte Doppelbindungen im Polymeren verbleiben, d.h., daß einer oder mehrere der Reste $R^6$ bis $R^{14}$ ungesättigt sind, können diese Doppelbindungen zu nachträglichen Verzweigungen oder zur Vernetzung genutzt werden, z.B. zur Fixierung der Dimension der Folie oder des Tiefziehteils oder auch zur chemischen Modifizierung, z. B. zur Einführung von polaren Gruppen (z.B. Hydroxyl-, Carboxyl-Gruppen) durch Oxidation der Doppelbindung.

Der Gehalt an Wiederholungseinheiten der Formel (I) in dem Cycloolefincopolymeren beträgt 5-95 Mol-%, bevorzugt 20-70 Mol-%. Der Gehalt an Wiederholungseinheiten der Formel (II) in dem Cycloolefincopolymeren beträgt 95 - 5 Mol-%, bevorzugt 30 - 80 Mol-%. Die Wiederholungseinheit der Formel (III) ist nicht zwingend vorhanden und ist deshalb in dem Polymeren in einer Menge von 0-5 Mol-%, bevorzugt 0 - 3 Mol-% enthalten. Die Wiederholungseinheit der Formel (IV) ist ebenfalls nicht zwingend vorhanden und ist deshalb in dem Polymeren in einer Menge von 0-5 Mol-%, bevorzugt 0-3 Mol-% enthalten. Die Wiederholungseinheit der Formel (V) ist ebenfalls nicht zwingend vorhanden

und ist folglich in dem Polymeren in einer Menge von 0-5 Mol-%, bevorzugt 0-3 Mol-% enthalten. Alle obengenannten Mol-%-Angaben beziehen sich auf das Gewicht des eingesetzten Cycloolefincopolymeren. Die Summe aller Mol-%-Anteile der Wiederholungseinheiten (I), (II), (III), (IV) und (V) beträgt 100 Mol-%.

Die molaren Anteile der Strukturen (I), (II), (III), (IV) und (V) beeinflussen die Glastemperatur ($T_g$) der erhaltenen Cycloolefincopolymere. Bei Copolymeren, welche ausschließlich aus den Wiederholungseinheiten der Formeln (I) und (II) bestehen, wobei (II) Ethylen ist, führt ein Molanteil von 25 Gew.-% an (I) zu einem $T_g$ von ca. 50°C; ein Molanteil von 65 Gew.-% an (I) führt zu einem $T_g$ von ca. 200°C. Andere Monomerzusammensetzungen verhalten sich ähnlich, d.h. höhere Molanteile an Wiederholungseinheiten der Formel (I) führen zu höheren Glastemperaturen.

Für die erfindungsgemäßen steifen Folien werden Glastemperaturen von 50°-250° C, insbesondere 80°-200° C bevorzugt.

Zur Herstellung des Polymeren können einige ausgewählte verbrückte Metallocen-Katalysatorsysteme verwendet werden, wie sie in DE-A 40 36 264 und EP-A 0 407 870 beschrieben sind. Die Wahl des Katalysators und der Polymerisationsbedingungen sind kritisch für die Erzielung der erfindungsgemäßen Mikrostruktur. Methylaluminoxan / Diphenylmethylen-(cyclopentadienyl)-(9-fluorenyl)-zirkondichlorid- oder Isopropylen-(cyclopentadienyl)-(9-fluorenyl)-zirkondichlorid-Systeme haben sich als geeignet erwiesen. Jedoch sind auch andere Katalystoren für die Herstellung der Polymeren geeignet, solange die erfindungsgemäße Mikrostruktur erhalten wird. Zwei Beispiele für Katalysatoren, die nicht zu der erwünschten Mikrostruktur führen, sind rac-Dimethylsilyl-bis-(1-indenyl)-zirkondichlorid- und Isopropylen-(cyclopentadienyl)-(1-indenyl)-zirkondichlorid. Die Herstellung der Cycloolefincopolymere geschieht zweckmäßigerweise nach dem in der DE-A 40 36 264 beschriebenen Verfahren. Hierbei geht man am besten so vor, daß man das Cycloolefin und das Olefin in einem Polymerisationsreaktor vorlegt und mit dem gelösten oder suspendierten Katalysatorsystem versetzt und auf Reaktionstemperatur bringt. Durch geeignete Wahl der Reaktionstemperatur kann das Einbauverhältnis der Monomeren in das Polymere und somit die Glastemperatur des Polymeren gesteuert werden. Zur Erzielung einer gleichmäßigen Einbaurate wird zweckmäßigerweise der Druck des meist gasförmigen Olefins während der Polymerisation konstant gehalten. Nach Beendigung der Reaktion wird der Katalysator beispielsweise durch Zugabe eines Alkohols desaktiviert und vom Polymeren abgetrennt.

Der Nachweis der erfindungsgemäßen Mikrostruktur kann entweder über das intrinsische E-Modul ($E_i$) oder mittels $^{13}$C-NMR-Spektrum erfolgen.

Der Nachweis der Mikrostruktur über die mechanischen Eigenschaften des Polymeren erfolgt im Zugversuch. Es ist dabei wichtig, daß die Probe nicht mehr als 2 % Zuschlagstoffe oder andere Polymere enthält, ausreichend dick und völlig isotrop ist, d.h. keine Orientierung aufweist. Wenn zuviele Fremdstoffe vorhanden sind, werden nicht die intrinsischen Zug-E-Modul-Werte des Cycloolefincopolymeren nicht gemessen, sondern die Eigenschaften der Mischung. Der intrinsische E-Modul-Wert, $E_i$, wird bei sehr geringen Dehnungen bestimmt (unter 0,1 %, vorzugsweise von 0,03 bis 0,05 %). Es ist in der Regel nicht möglich, sehr dünne und daher im allgemeinen flexible Folien mit einer Dicke wesentlich unter 1 mm ausreichend gerade und verzugsfrei in den Zugdehnungsspannkopf einzuführen, um solche Dehnungen ausreichend genau bestimmen zu können. Daher sollte die Bestimmung des $E_i$-Wertes an Proben mit einer Mindestdicke von 1 mm erfolgen. Da die Orientierung der Proben die Zug-E-Modul-Werte erhöhen können, müssen diese vor der Messung der intrinsischen Eigenschaften in den isotropen Zustand überführt werden. Diese Isotropisierung kann durch Tempern für mindestens 30 Minuten 20 °C oberhalb $T_g$ erfolgen. Alternativ zum Tempern von Folienproben können aus dem Polymeren auch nicht-orientierte Spritzgußformlinge hergestellt werden, die als $E_i$-Meßproben dienen.

Der intrinsische E-Modul, $E_i$, ist ein E-Modul-Wert, der nach DIN 53 547 bei einer Dehnung <0,1 % bestimmt wird. Um die Dehnung ausreichend genau messen zu können, muß die Zugdehnungsprüfmaschine mit ausreichend genauen Wegaufnehmern (Auflösung ca. 1 µm) ausgestattet sein. Optische oder tastende Wegaufnehmer können hierfür geeignet sein, Traversenwegaufnehmer sind es in der Regel nicht.

Die erfindungsgemäßen steifen Folien enthalten Cycloolefincopolymere, deren intrinsische Zug-E-Modul-Werte nach der folgenden Gleichung vom jeweiligen $T_g$ des Polymeren abhängen:

$$E_i = (0{,}0025\ [\text{Gpa}/°\text{C}] \times T_g[°\text{C}]) + B\ [\text{GPa}]$$

mit B = 2,93-3,18

Nicht erfindungsgemäße Folien haben $E_i$-Werte, die niedriger als die erfindungsgemäßen sind. Der intrinsische Zug-E-Modul-Wert eines Cycloolefincopolymeren wird durch die Mikrostruktur des Kettenaufbaus bestimmt, in ähnlicher Weise wie die Taktizität anderer Polymerer deren mechanische Eigenschaften beeinflußt. Bei gleicher $T_g$, was etwa gleiche Molanteile der Monomere bedeutet, weisen die erfindungsgemäßen Polymeren einen höheren intrinsischen Zug-E-Modul auf.

Diese intrinsischen E-Modul-Werte, $E_i$, des Polymeren beeinflussen die mechanischen Eigenschaften der Folie, vor allem, wenn sie orientiert ist. Es ist bekannt, daß die Steifigkeit von Formteilen, auch Folien, durch Orientierung auch erhöht wird. Eine orientierte, nicht-erfindungsgemäße Folie kann zwar eine höhere Steifigkeit aufweisen als eine nicht-orientierte, erfindungsgemäße Folie. Wenn jedoch Folien mit gleichem Orientierungsgrad, molarer Zusammensetzung und $T_g$ miteinander verglichen werden, wird die erfindungsgemäße Folie stets eine höhere Steifigkeit (E-Modul) aufweisen als die nicht-erfindungsgemäße, Cycloolefincopolymer-Folie. Je höher die Folien oder Formteile orientiert sind, desto höher ist der Dehnungsbereich, in dem diese erhöhte Steifigkeit zum tragen kommt. Daher ist bei nicht-orientierten Folien oder Formteilen die erhöhte Steifigkeit nur an dem $E_i$-Wert und kaum im Zug-Modul-Wert erkennbar, während bei orientierten Folien oder Formteilen die Steifigkeit auch im Zug-E-Modul meßbar ist. Die erfindungsgemäßen Folien zeigen auch verbesserte Modul-Werte in der Wärme.

Die Steifigkeit einer orientierten Folie wird meistens auch als E-Modul-Wert angegeben, jedoch ist dies nicht identisch mit den Werten, die hier als intrinsische E-Modul-Werte ($E_i$) bezeichnet werden. Bei Folien müssen die E-Modul-Werte aufgrund der bereits erwähnten Schwierigkeiten bei der Einspannung in den Klemmbacken der Zugprüfmaschinen bei höheren Dehnungen gemessen werden. Der E-Modul an den Folienproben wird zwischen 0,3 und 0,5 % Dehnung bestimmt, d.h. bei einer zehnfachen Dehnung gegenüber dem intrinsischen E-Modul. Grundsätzlich ergeben diese E-Modul-Messungen, die bei höheren Dehnungen an orientierten Proben gemessen werden, andere Werte als die intrinsischen Werte, die bei geringen Dehnungen an nicht-orientierten Proben gemessen werden. Ob diese Folienwerte höher oder tiefer als die intrinsischen Werte sind, hängt vom Orientierungsgrad ab. Bei hoher Orientierung (wie man z.B. bei Streckverhältnissen ca. >1,5 erhält) ist der Folienwert höher als der intrinsische Wert, der an nicht-orientierten Proben gemessen wird. Bei geringer Orientierung (wie z.B. ca. 1,0-1,5) ist der intrinsische Wert höher als der Folienwert.

Dieerfindungsgemäße Mikrostrukturverursachteinige charakteristische Peaks im $^{13}C$-NMR-Spektrum. Die Abbildung 1 zeigt ein typisches Spektrum von Cycloolefincopolymeren mit der erfindungsgemäßen Mikrostruktur; Abb. 2 zeigt im Vergleich ein Spektrum eines Cycloolefincopolymeren ohne die erfindungsgemäße Mikrostruktur. Die Spektren weisen einige gemeinsame Peaks und Unterschiede auf, wobei die Unterschiede wahrscheinlich auf einen unterschiedlichen sterischen Aufbau der Polymeren ("Taktizität") zurückgeführt werden können. Die spezielle Mikrostruktur ergibt einige charakteristische Peaks:

| Gemeinsame Peaks | Charakteristische Peaks |
|---|---|
| (ppm) | (ppm) |
| 47,5 | 49,8 |
| 46,8 | |
| | |
| 41,7 | 40,8 |
| | |
| 32,8 | 33,3 |
| 30,1 | 29,3 |

Da die Lage der einzelnen Peaks etwas in Abhängigkeit der Aufnahmebedingungen der Spektren variieren kann, können die in allen Spektren gemeinsamen Peaks als Referenzpunkte dienen. Die Höhen der jeweiligen Peaks variieren je nach Monomerzusammensetzung, jedoch sind die Lagen charakteristisch. Eindeutig für die erfindungsgemäße Mikrostruktur sind die Peaks bei 29,3, 33,3, 40,8 und 49,8 ppm. (Die genannten Peaks sind charakteristisch für die spezielle Mikrostruktur, jedoch enthalten die Spektren in der Regel auch andere Peaks). Zusatzstoffe oder Verunreinigungen können zu zusätzlichen Peaks in einem Spektrum führen. Daher können Spektren der erfindungsgemäß einzusetzenden Polymeren auch zusätzliche Peaks enthalten.

Der Vorteil der vorliegende Erfindung ist, daß die oben erwähnte Mikrostruktur bei einem gegebenen Orientierungsgrad steifere Folien ergibt als entsprechende Folien aus Cycloolefincopolymeren mit einer anderen Mikrostruktur oder keiner Mikrostruktur.

In einer bevorzugten Ausführung enthält die Folie feine inerte Partikel, die das Schlupf- und Wickelverhalten

verbessern. Solche Partikel, die in Mengen von 0 bis 2 Gew.-% enthalten sein können, sind beispielsweise: $SiO_2$, $Al_2O_3$, Silikate mit einem $SiO_2$-Anteil von mindestens 30 Gew.-%, amorphe und kristalline Tonminerale, Alumosilikate, Oxide von Mg, Zn, Zr und Ti, Sulfate von Ca, Mg und Ba, Phosphate von Li, Na und Ca (inclusive der Monohydrogensalze und Dihydrogensalze), Benzoate von Li, Na und K, Terephthalate von Ca,Ba, Zn und Mn, Titanate von Mg, Ca, Ba, Zn, Cd, Pb, Sr, Mn, Fe, Co und Ni, Chromate von Ba und Pb, Kohlenstoff (z.B. Ruß oder Graphit), Glas (Glaspulver und Glaskugeln), Carbonate von Ca und Mg, Flußspat, Sulfide von Zn und Mo, organische Polymersubstanzen wie Polytetrafluorethylenpolyethylen, Talkum, Lithiumfluorid, und die Ca-, Ba-, Zn- und Mn-Salze von organischen Säuren.

Die Folie kann auch geeignete Additive wie z.B. Stabilisatoren, Gleitmittel oder Antioxidantien enthalten. Prinzipiell sind Additive, die für Polyolefine wie Polyethylen oder Polypropylen verwendet werden, auch für die Cycloolefincopolymerfolien geeignet. Als UV-Stabilisatoren können beispielsweise Absorber wie Hydroxyphenylbenzotriazole, Hydroxybenzophenone, Formamidin oder Benzyliden-Campher, Quencher wie Zimtsäureester oder Nickel-Chelate, Radikalfänger wie sterisch gehinderte Phenole, Hydroperoxidzersetzer wie Nickel- oder Zink-Komplexe schwefelhaltiger Verbindungen oder Lichtstabilisatoren vom HALS-Typ, sowie deren Gemische eingesetzt werden. Als Gleitmittel können beispielsweise verwendet werden: Fettsäuren sowie deren Ester, Amide und Salze, Silikone oder Wachse wie PP- oder PE-Wachse. Als Antioxidantien können beispielsweise zugesetzt werden Radikalfänger wie substituierte Phenole und aromatische Amine und/oder Peroxidzersetzer wie Phosphite, Phosphonate und Thioverbindungen.

Die erfindungsgemäße Folie kann ein- oder mehrschichtig sein. Mindestens eine Schicht besteht überwiegend, d.h. zu mindestens 85 Gew.-%, bevorzugt zu 90-100 Gew.-%, aus den oben beschriebenen Cycloolefincopolymeren. Eine bevorzugte Ausführung ist die Monofolie.

In einer anderen bevorzugten Ausführung trägt die erfindungsgemäße Hauptschicht eine oder zwei dünne Polymerdeckschichten mit niedrigeren Glastemperaturen als die Hauptschicht, vorzugsweise mindestens 20° niedriger. Cycloolefincopolymere sind als Deckschicht besonders bevorzugt, jedoch müssen diese Deckschichten nicht die spezielle Mikrostruktur aufweisen.

Zur Eigenschaftsmodifizierung kann die Folie beschichtet sein.

Die erfindungsgemäße Folie kann zur Eigenschaftsverbesserung andere kompatible oder nicht kompatible Polymere enthalten. Diese Polymere können separate Schichten bilden oder mit dem Cycloolefincopolymeren vermischt sein. Beispiele für solche Polymere sind: Polyethylen, Polypropylen, Polymethylbuten-1, Poly(4-methylpenten-1), Polybuten-1 und Polystyrol, Polyvinylchlorid, Polyvinylidenchlorid, Polyvinylfuorid, Polytetrafluoroethylen, Polychloropren, Polyacrylat, Polymethacrylat, Polyacrylamid, Polyacrylnitril, Acrylnitril/Butadien/Styrol-Copolymere, Acrylnitril/Styrol-Copolymere und Acrylnitril/Styrol/Acrylat-Copolymere, Polyvinylalkohol, Polyvinylacetat, Polyvinylstearat, Polyvinylbenzoat, Polyvinylmaleat, Polyvinylbutyral, Polyallylphthalat, Polyallylmelamin, Copolymere aus den o.g. Monomeren wie Ethylen/Vinylacetat-Copolymer, Polyethylenoxid und Polymere aus Bis-Glycidylether, Polyoxymethylen, Polyoxyethylen und Polyoxymethylen/Ethylenoxid-Copolymere, Polyphenyloxidpolymere, Polycarbonate, Polysulfone, Polyurethane, Nylon 6, Nylon 66, Nylon 11 und Nylon 12, Polyethylenterephthalat, Polybutylenterephthalat und Poly-1,4-dimethylolcyclohexanterephthalat, Polyethylennaphthalat,Polyethylennaphthalat-bibenzoat, Phenolformaldehydharze und Melaminformaldehydharze, Cellulose, Cellulosepropionate und Celluloseether sowie Proteine.

Die Folien können durch verschiedene Verfahren hergestellt werden. Gießen aus Lösung ist möglich, aber die thermoplastische Verarbeitung ist in der Regel vorteilhafter. Plattenpressen eignet sich gut für Versuche, jedoch sind kontinuierliche Verfahren wie Extrusion oder Kalandrieren für die industrielle Herstellung wirtschaftlicher.

Extrudierte Folien können als Schlauch oder Flachfolie geformt werden. Zur Herstellung von mehrschichtigen Folien empfiehlt sich die Coextrusion.

Häufig werden die Folien zur weiteren Verbesserung der mechanischen Eigenschaften orientiert. Dies erfolgt durch Streckung. Die Strecktemperaturen sollten zweckmäßigerweise in einem Temperaturintervall von 40 °C unter der Glastemperatur ($T_g$-40°C) bis 50°C oberhalb der Glastemperatur ($T_g$ + 50°C) liegen. Die Orientierung kann uniaxial oder biaxial erfolgen.

Für die industrielle Fertigung eignen sich Strecktemperaturen oberhalb $T_g$, weil dies wegen der höheren erzielbaren Streckgeschwindigkeiten eine schnellere Fertigung erlaubt. Temperatur, Streckrate und Streckverhältnisse müssen so aufeinander abgestimmt sein, daß die Folie nicht reißt. Die Streckgeschwindigkeit beträgt bevorzugt 1 - 500000 %/Min.. Die Streckverhältnisse in Längs- und Querrichtung betragen jeweils 1,1:1 - 10:1, vorzugsweise 1,5:1 - 4:1. Das Flächenstreckverhältnis sollte vorzugsweise 3-20 betragen.

Bei der Ausführung der Streckung oberhalb $T_g$ ist eine rasche Abkühlung der Folie unter $T_g$ nach erfolgter Streckung zweckmäßig. Ansonsten besteht die Gefahr, daß die Orientierung durch Relaxation verlorengeht. Diese Verfahrensmaßnahme ist kritischer bei den amorphen Cycloolefincopolymeren als bei den teilkristallinen Cycloolefincopolymeren.

Bei biaxialer Orientierung kann die Streckung simultan oder sequentiall durchgeführt werden. Bei Flachfolien sind Tenterverfahren geeignet, aber auch Simultanstreckrahmen. Schlauchfolien werden durch Aufblasen bei gleichzeitigem Längsabzug biaxial orientiert.

Orientierte amorphe Folien können als Schrumpffolien eingesetzt werden.

Nicht oder nur geringfügig orientierte Folien können zur Herstellung von Tiefziehteilen verwendet werden.

Die Oberflächen der Folien können zur Erzielung von z.B. Haftvermittlung oder Bedruckbarkeit oder Antistatik oder Antihaft-Eigenschaften modifiziert werden. Diese Modifizierung kann entweder durch Behandlungsmethoden wie Corona-, Flamm-, Plasma- oder Oxidationsbehandlung erfolgen oder auch durch die Aufbringung einer Beschichtung aus Lösung oder Dispersion.

Im Folgenden ist die Erfindung anhand von Beispielen näher erläutert.

**Beispiele**

In den nachfolgenden Beispielen werden folgenden Untersuchungsmethoden verwendet.

Die Glastemneratur ($T_g$) wurde als sprunghafter Anstieg der Wärmekapazität im DSC-Diagramm bestimmt. Die DSC-Diagramme wurden mit einem Perkin-Elmer DSC 7 aufgenommen.

Die Viskositätszahl (VZ) wurde entsprechend DIN 53 728 in Dekalin bei 135°C bestimmt.

Die mechanischen Eigenschaften der Folien wurden mit einer Zugprüfmaschine 1445 der Fa. Zwick an 15 mm breiten Proben bei einer Einspannlänge von 100 mm untersucht. Der Zug-E-Modul wurde im Dehnungsbereich von 0,3 bis 0,5% bei einer Dehngeschwindigkeit von 10 mm/min bestimmt. Die Reißfestigkeit und -dehnung wurden bei 100 mm/min bestimmt.

Der $E_i$-Wert (intrinischer Modul) wurde an Spritzgußformlingen entsprechend DIN 53 457 in eine Zugprüfmaschine der Firma Zwick mit mechanisch tastendem Längsänderungsaufnehmer bestimmt. $E_i$ wurde als der E-Modul zwischen 0,03 und 0,05 % Dehnung bestimmt.

Beispiel 1

Herstellung eines Polymeren mit der erfindungswesentlichen speziellen Mikrostruktur:

Ein sauberer und trockener 75 $dm^3$-Polymerisationsreaktor mit Rührer wurde mit Stickstoff und dann mit Ethylen gespült und mit 22 000 g Norbornen-Schmelze bei 50° C gefüllt. Unter Rühren wurde dann der Reaktor auf einer Temperatur von 50° C gehalten und 15 bar Ethylen (Überdruck) aufgedrückt.

Danach wurden 580 $cm^3$ toluolische Methylaluminoxan-Lösung (MAO-Lsg., 10,1 Gew.-% Methylaluminoxan mit einer Molmasse von 1300 g/mol nach kryoskopischer Bestimmung) in den Reaktor dosiert und die Mischung 15 Minuten bei 50° C gerührt, wobei durch Nachdosieren der Ethylendruck bei 15 bar gehalten wurde. Parallel dazu wurden 1000 mg Diphenylmethylen(cyclopentadienyl)-(9-fluorenyl)-zirkondichlorid (Metallocen-Katalysator) in 1000 ml MAO-Lösung (Konzentration und Qualität wie oben) gelöst und durch 15 minütiges Stehenlassen voraktiviert. Dann wurde die Lösung des Komplexes in den Reaktor dosiert und gleich anschließend - zur Molekulargewichtsregulierung - 3,5 l Wasserstoff über eine Schleuse eindosiert. Unter Rühren (750 UPM) wurde dann 45 Minuten bei 50° C polymerisiert, wobei der Ethylendruck durch Nachdosieren bei 15 bar gehalten wurde. Dann wurde der Reaktorinhalt schnell in ein Rührgefäß abgelassen, in dem 200 $cm^3$ Isopropanolvorgelegt waren. Die Mischung wurde in 500 $dm^3$ Aceton eingetropft, 10 Minuten gerührt und dann der suspendierte polymere Feststoff abfiltriert.

Das abfiltrierte Polymere wurde dann in 2 $dm^3$ einer Mischung aus 2 Teilen 3-normaler Salzsäure und einem Teil Ethanol gegeben und diese Suspension 2 Stunden gerührt. Das Polymere wurde dann erneut abfiltriert, mit Wasser neutral gewaschen und bei 80° C und 0,2 bar 15 Stunden getrocknet. Es wurde eine Produktmenge von 4500 g erhalten. An dem Produkt wurde eine Viskositätzahl (VZ) von 103 $cm^3/g$ und eine Glastemperatur ($T_g$) von 123° C gemessen.

Ein $^{13}C$-NMR-Spektrum einer Lösung des Polymeren in Hexachlorbutadien und Tetrachlorethan-D2 wurde mit einem 400 MHz-NMR-Gerät (Bruker AM 400) aufgenommen. Wie aus der Abbildung 1 ersichtlich, weist das Spektrum die charakteristischen Peaks bei 29,3 33,3 40,8 und 49,8 ppm auf.

Beispiele 2,3 und 4

Herstellung weiterer Polymere mit der erfindungswesentlichen speziellen Mikrostruktur:

Analog zu Beispiel 1 wurden Polymere mit unterschiedlichen Glastemperaturen hergestellt, wobei auf die Zugabe von Wasserstoff verzichtet wurde. In Beispiel 4 wurde Isopropylen-(cyclopentadienyl)-(9-fluorenyl)-zirkondichlorid als Metallocen-Katalysator eingesetzt.

Tabelle 1 faßt die geänderten Reaktionsbedingungen zusammen.

Die für die Mikrostruktur charakteristischen Peaks im $^{13}C$-NMR-Spektrum bei 29,3, 33,3, 40,8 und 49,8 ppm sind auch hier vorhanden.

## Tabelle 1

| Beispiel | Norbornenmenge | Temp. | Ethylendruck | Menge Metallocen | Kat. Lösung | Zeit | Ausbeute | Tg | VZ |
|---|---|---|---|---|---|---|---|---|---|
| | (g) | (°C) | (bar) | (mg) | (ml) | (min) | (g) | (°C) | ($cm^3/g$) |
| 2 | 22000 | 70 | 10 | 500 | 500 | 140 | 4400 | 168 | 208 |
| 3 | 22000 | 70 | 15 | 500 | 500 | 80 | 5500 | 144 | 163 |
| 4 | 22000 | 70 | 10 | 25 | 500 | 35 | 4200 | 153 | 129 |

Beispiel 5 (Vergleichsbeispiel)

Herstellung eines Polymeren ohne die erfindungswesentliche spezielle Mikrostruktur:

Analog zum Beispiel 1 wurde ein Polymer ohne die spezielle Mikrostruktur hergestellt. Anstelle von Diphenylmethylen-(cyclopentadienyl)-(9-fluorenyl)zirkondichlorid wurde rac-Dimethylsilyl-bis-(1-indenyl)-zirkondichlorid als Metallocen-Katalysator verwendet.
Tabelle 2 faßt die Reaktionsbedingungen zusammen. Das $^{13}$C-NMR-Spektrum des Polymers gemäß Beispiel 5 ist in Abb. 2 widergegeben. Die für die spezielle Mikrostruktur charakteristischen Peaks bei 29,3, 33,3, 40,8 und 49,8 ppm fehlen.

## Tabelle 2

| Beispiel | Norbornenmenge | Temp. | Ethylendruck | Menge Metallocen | Kat. Lösung | Zeit | Ausbeute | Tg | VZ |
|---|---|---|---|---|---|---|---|---|---|
| | (g) | (°C) | (bar) | (mg) | (ml) | (min) | (g) | (°C) | ($cm^3/g$) |
| 5 | 24800 | 70 | 15 | 3000 | 1000 | 220 | 5100 | 147 | 90 |

Beispiel 6

Zusammenhang zwischen den $E_i$-Werten und der Glastemperatur bei Polymeren mit der speziellen Miktrostrukur

Weitere Polymere mit der speziellen Mikrostruktur mit unterschiedlichen Glastemperaturen wurden analog zu den Beispielen 1 bis 3 unter Verwendung von Diphenylmethylen-(cyclopentadienyl)-(9-fluorenyl)-zirkondichlord hergestellt, wobei die Glastemperatur über die Einbauverhältnisse von Norbornen und Ethylen variiert wurde. Die Spektren aller Polymerer wiesen die charakteristischen Peaks bei 29,3; 33,3; 40,8 und 49,8 ppm auf.
Diese Polymere wurden aufgeschmolzen und mit einer Spritzgußmaschine zu Schulterstäben entsprechend DIN 53 457 geformt. An diesen Proben wurden die intrinsischen E-Modul-Werte ($E_i$-Werte) bestimmt. Mittels DSC wurden die Glastemperaturen ($T_g$) ebenfalls bestimmt.
Abbildung 3 zeigt die Abhängigkeit der $E_i$-Werte vom $T_g$ der einzelnen Polymeren. Diese Polymeren erfüllten die Beziehung:

$$E_i = (0{,}0025\ [GPa/°C] \times T_g\ [°C] + B\ [GPa]$$

mit B = 2,93-3,18

Beispiel 7 (Vergleichsbeispiel)

Zusammenhang zwischen den $E_i$-Werten und der Glastemperatur bei Polymeren ohne die spezielle Mikostruktur

Weitere Polymere ohne die spezielle Mikrostruktur mit unterschiedlichen Glastemperaturen wurden analog zu Beispiel 4 unter Verwendung von rac-Dimethylsilyl-bis-(1-indenyl)-zirkondichlord hergestellt, wobei die Glastemperatur über die Einbauverhältnisse von Norbornen und Ethylen variiert wurde. In den Spektren dieser Polymerer fehlten die charakteristischen Peaks bei 29,3; 33,3; 40,8 und 49,8 ppm.

Abbildung 3 zeigt die Abhängigkeit der $E_i$-Werte vom $T_g$ der einzelnen Polymeren. Diese Polymeren hatten $E_i$-Werte deutlich unterhalb die der Beziehung:

$$E_i = (0{,}0025\ [GPa/°C] \times T_g\ [°C] + B\ [GPa]$$

mit B = 2,93-3,18

Beispiel 8

Herstellung einer nicht orientierten Folie mit der erfindungswesentlichen speziellen Mikrostruktur:

Das Polymer aus Beispiel 3 wurde in einer Plattenpresse bei 250° C zu einer 350 µm dicken Folie gepreßt. Die Folie war transparent und farblos. Die mechanischen Eigenschaften der Folie waren:

| | |
|---|---|
| E-Modul | 2,6 GPa |
| Reißfestigkeit | 30 MPa |
| Reißdehnung | 2 % |

Beispiel 9 (Vergleichsbeispiel)

Herstellung einer nicht orientierten Folie ohne erfindungswesentliche spezielle Mikrostruktur:

Das Polymer aus Beispiel 5 wurde in einer Plattenpresse bei 250° C zu einer 320 µm dicken Folie gepreßt. Die Folie war transparent und farblos. Die mechanischen Eigenschaften der Folie waren:

| | |
|---|---|
| E-Modul | 2,6 GPa |
| Reißfestigkeit | 50 MPa |
| Reißdehnung | 3 % |

Beispiel 10

Herstellung einer steifen orientierten Folie mit der erfindungswesentlichen speziellen Mikrostruktur:

Die nicht orientierte Folie aus Beispiel 8 wurde in einer Folienstreckapparatur (Karo III der Fa. Brückner, Siegsdorf) bei 180° C längs und quer jeweils um einen Faktor 2,3 gestreckt.

Die mechanischen Eigenschaften der Folie waren:

| | |
|---|---|
| E-Modul | 3,6 GPa |
| Reißfestigkeit | 47 MPa |
| Reißdehnung | 2 % |

Beispiel 11 (Vergleichsbeispiel)

Herstellung von orientierten Folien ohne erfindungswesentliche spezielle Mikrostruktur:

Die nicht orientierte Folie aus Beispiel 9 wurde analog zu Beispiel 10 gestreckt. Die mechanischen Eigenschaften waren:

| | |
|---|---|
| E-Modul | 3,2 GPa |
| Reißfestigkeit | 60 MPa |
| Reißdehnung | 2 % |

Beispiel 12

Herstellung eines Tiefziehteils

Die Folie aus Beispiel 8 wurde in einer Vakuumtiefziehmaschine auf ca. 180° C erwärmt und dann zu einem konischen Becher in einer kalten Tiefziehform geformt. Die Steifigkeit des Bechers wurde geprüft. Streifen aus dem Becherboden wiesen einen E-Modul von 3,5 GPa auf.

Beispiel 13 (Vergleichsbeispiel)

Die Folie aus Beispiel 9 wurde analog zu Beispiel 12 zu einem Becher geformt. Eine Prüfung der Steifigkeit ergab einen E-Modul-Wert von 3,1 GPa.

## Patentansprüche

1. Ein- oder mehrschichtige unorientierte oder mono- oder biaxial orientierte Folie, bei der mindestens eine Schicht ein Cycloolefincopolymer enthält, dadurch gekennzeichnet, daß das Cycloolefincopolymer ein intrisisches E-Modul $E_i$ aufweist, welches folgende Abhängigkeit von der Glastemperatur aufweist:

$$E_i = (0{,}0025\ [GPa/°C] \times T_g\ [°C]) + B\ [GPa]$$

mit B = 2,93-3,19.

2. Ein- oder mehrschichtige unorientierte oder mono- oder biaxial orientierte Folie, bei der mindestens eine Schicht ein Cycloolefincopolymer enthält, dadurch gekennzeichnet, daß das $^{13}C$-NMR-Spektrum des Cycloolefincopolymeren einen Peak bei 40,8 ppm aufweist.

3. Folie nach Anspruch 1 oder 2, dadurch gekennzeichnet, daß das $^{13}C$-NMR-Spektrum des Cycloolefincopolymeren Peaks bei 29,3, 33,3, 40,8 und 49,8 ppm aufweist.

4. Folie nach einem oder mehreren der Ansprüche 1 bis 3, dadurch gekennzeichnet, daß sie einschichtig ist.

5. Folie nach einem oder mehreren der Ansprüche 1 bis 4, dadurch gekennzeichnet, daß sie uniaxial orientiert ist.

6. Folie nach einem oder mehreren der Ansprüche 1 bis 4, dadurch gekennzeichnet, daß sie biaxial orientiert ist.

7. Folie nach einem oder mehreren der Ansprüche 1 bis 6, dadurch gekennzeichnet, daß das Cycloolefincopolymer aus Wiederholungseinheiten der Formel (I) und (II) und gegebenenfalls (III) und/oder (IV) und/oder (V)

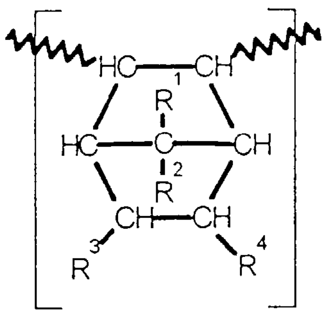

(I)

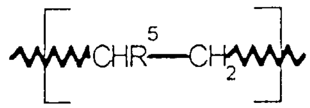

(II)

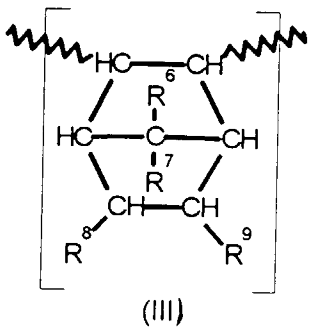

(III)

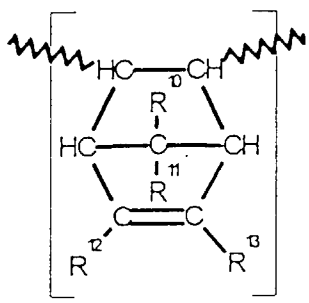

(IV)

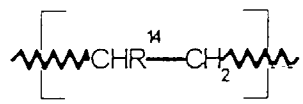

(V)

besteht,
wobei (III) ungleich (I) ist,

$R^1$ bis $R^5$ gleich oder verschieden sind und H, Aryl, $C_1$ - $C_{10}$- Alkyl, $C_2$ - $C_{10}$- Alkenyl, $C_3$ - $C_{10}$-Cycloalkyl oder $C_3$ - $C_{10}$-Cycloalkenyl bedeuten und wobei

$R^6$ bis $R^{14}$ gleich oder verschieden sind und die Bedeutung von $R^1$ bis $R^5$ haben oder wobei die Restepaare $R^6/R^7$, $R^8/R^9$, $R^{10}/R^{11}$ und/oder $R^{12}/R^{13}$ jeweils untereinander verbunden sind und zusammen mit den C-Atomen an denen sie gebunden sind einen $C_4$- $C_{10}$-Cycloalkyl- oder $C_4$ - $C_{10}$-Cycloalkenylrest darstellen, der seinerseits durch einen-C($R^1$,$R^2$)-Rest überbrückt sein kann, wobei $R^1$ und $R^2$ die oben für $R^1$ bis $R^5$ angegebenen Bedeutungen haben,

und wobei der Gehalt an Wiederholungseinheiten der Formel (I) in dem Cycloolefincopolymeren 5 bis 95 Mol-% und an Wiederholungseinheiten der Formel (II) 95 bis 5 Mol-% beträgt.

**8.** Folie nach Anspruch 7, dadurch gekennzeichnet, daß $R^1$, $R^2$,$R^3$, $R^4$ und $R^5$ Wasserstoff bedeuten.

**9.** Folie nach einem oder mehreren der Ansprüchen 1 bis 6, dadurch gekennzeichnet, daß das Cycloolefincopolymer unter Verwendung eines verbrückten Metallocen-Katalysatorsystems hergestellt wurde.

**10.** Folie nach einem oder mehreren der Ansprüchen 1 bis 9, dadurch gekennzeichnet, daß die Glastemperatur des Cycloolefincopolymeren zwischen 50 und 250 °C, vorzugsweise zwischen 80 und 200 °C liegt.

**11.** Folie nach einem oder mehreren der Ansprüchen 1 bis 10, dadurch gekennzeichnet, daß sie, bezogen auf das Gewicht der Folie, 0 bis 2 Gew.-% inerte Partikel enthält.

**12.** Verwendung einer Folie nach einem oder mehreren der Ansprüche 1 bis 11 als Kondensatordielektrikum.

**13.** Verwendung einer Folie nach einem oder mehreren der Ansprüche 1 bis 11 als Elektroisolierung.

**14.** Verwendung einer Folie nach einem oder mehreren der Ansprüche 1 bis 11 als Verpackungsfolie.

**15.** Verwendung einer Folie nach einem oder mehreren der Ansprüche 1 bis 11 als Reprofolie.

**16.** Verwendung einer Folie nach einem oder mehreren der Ansprüche 1 bis 11 als Sichtfenster für LCD-Zellen.

## Claims

**1.** A single- or multilayer non-oriented or mono- or biaxially oriented film in which at least one layer comprises a cycloolefin copolymer, wherein the cycloolefin copolymer has an intrinsic E modulus $E_i$ which has the following dependence on the glass transition temperature:

$$E_i = (0.0025\ [\text{GPa}/°\text{C}] \times T_g\ [°\text{C}]) + B\ [\text{GPa}]$$

where B = 2.93-3.19.

**2.** A single- or multilayer non-oriented or mono- or biaxially oriented film in which at least one layer comprises a cycloolefin copolymer, wherein the $^{13}$C-NMR spectrum of the cycloolefin copolymer has a peak at 4C.8 ppm.

**3.** A film as claimed in claim 1 or 2, wherein the $^{13}$C-NMR spectrum of the cycloolefin copolymer has peaks at 29.3, 33.3, 40.8 and 49.8 ppm.

**4.** A film as claimed in one or more of claims 1 to 3, which is a single-layer film.

**5.** A film as claimed in one or more of claims 1 to 4, which is uniaxially oriented.

**6.** A film as claimed in one or more of claims 1 to 4, which is biaxially oriented.

**7.** A film as claimed in one or more of claims 1 to 6, wherein the cycloolefin copolymer comprises repeating units of the formula III and (II) and if appropriate (III) and/or (IV) and/or (V)

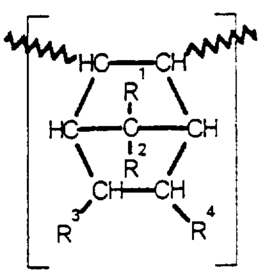

(I)

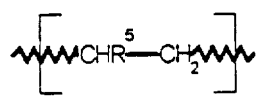

(II)

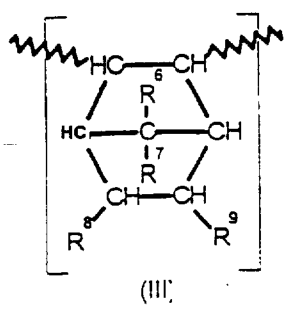

(III)

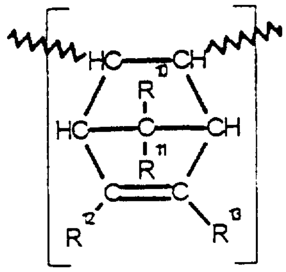

(IV)

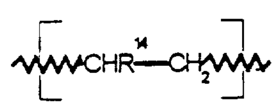

(V)

in which (III) is not identical to (I),

$R^1$ to $R^5$ are identical or different and are H, aryl, $C_1$-$C_{10}$-alkyl, $C_2$-$C_{10}$-alkenyl, $C_3$-$C_{10}$-cycloalkyl or $C_3$-$C_{10}$-cycloalkenyl, and in which

$R^6$ to $R^{14}$ are identical or different and have the meaning of $R^1$ to $R^5$, or in which the radical pairs $R^6/R^7$, $R^8/R^9$, $R^{10}/R^{11}$ and/or $R^{12}/R^{13}$ in each case are bonded to one another and, together with the carbon atoms to which they are bonded, are a $C_4$-$C_{10}$-cycloalkyl or $C_4$-$C_{10}$-cycloalkenyl radical, which in turn can be bridged by a -C($R^1$,$R^2$)- radical, in which $R^1$ and $R^2$ have the meanings given above for $R^1$ to $R^5$,

and in which the content of repeating units of the formula (I) in the cycloolefin copolymer is 5 to 95 mol% and the content of repeating units of the formula (II) is 95 to 5 mol%.

**8.** A film as claimed in claim 7, wherein $R^1$, $R^2$, $R^3$, $R^4$ and $R^5$ are hydrogen.

**9.** A film as claimed in one or more of claims 1 to 6, wherein the cycloolefin copolymer has been prepared using a bridged metallocene catalyst system.

**10.** A film as claimed in one or more of claims 1 to 9, wherein the glass transition temperature of the cycloolefin copolymer is between 50 and 250°C, preferably between 80 and 200°C.

**11.** A film as claimed in one or more of claims 1 to 10, which comprises 0 to 2% by weight of inert particles, based on the weight of the film.

**12.** The use of a film as claimed in one or more of claims 1 to 11 as a capacitor dielectric.

**13.** The use of a film as claimed in one or more of claims 1 to 11 as electrical insulation.

**14.** The use of a film as claimed in one or more of claims 1 to 11 as packaging film.

**15.** The use of a film as claimed in one or more of claims 1 to 11 as a reproduction film.

**16.** The use of a film as claimed in one or more of claims 1 to 11 as a display window for LCD cells.

## Revendications

**1.** Feuille non orientée à une ou plusieurs couches ou orientée de manière monoaxiale ou biaxiale, dans laquelle au moins une couche contient un copolymère de cyclooléfine, caractérisée en ce que le copolymère de cyclooléfine présente un module d'élasticité intrinsèque $E_i$, lequel présente la dépendance suivante de la température de transition vitreuse :

$$E_i = (0{,}0025\ [GPa/°C] \times T_g\ [°C]) + B\ [GPa]$$

avec B = 2,93-3,19.

**2.** Feuille non orientée à une ou plusieurs couches ou orientée de manière monoaxiale ou biaxiale, dans laquelle au moins une couche contient un copolymère de cyclooléfine, caractérisée en ce que le spectre $^{13}$G-RMN du copolymère de cyclooléfine présente un pic à 40,8 ppm.

**3.** Feuille suivant la revendication 1 ou 2, caractérisée en ce que le spectre $^{13}$C-RMN du copolymère de cyclooléfine présente des pics à 29,3, 33,3, 40,8 et 49,8 ppm.

**4.** Feuille suivant l'une ou plusieurs des revendications 1 à 3, caractérisée en ce qu'elle est monocouche.

**5.** Feuille suivant l'une ou plusieurs des revendications 1 à 4, caractérisée en ce qu'elle est orientée de manière uniaxiale.

**6.** Feuille suivant l'une ou plusieurs des revendications 1 à 4, caractérisée en ce qu'elle est orientée de manière biaxiale.

**7.** Feuille suivant l'une ou plusieurs des revendications 1 à 6, caractérisée en ce que le copolymère de cyclooléfine est constitué d'unités répétitives de la formule (I) et (II) et, le cas échéant, (III) et/ou (IV) et/ou (V)

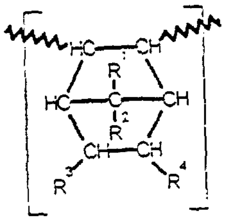
(I)

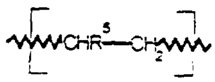
(II)

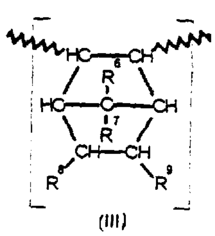
(III)

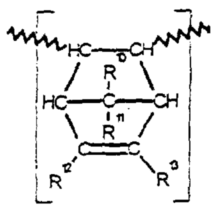
(IV)

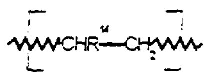
(V)

(III) étant différent de (I),

$R^1$ à $R^5$ étant identiques ou différents et signifiant H, aryle, alkyle en $C_1$-$C_{10}$, alcényle en $C_2$-$C_{10}$, cycloalkyle en $C_3$-$C_{10}$ ou cycloalcényle en $C_3$-$C_{10}$, et
$R^6$ à $R^{14}$ étant identiques ou différents et ayant la signification de $R^1$ à $R^5$ ou les paires de radicaux $R^6/R^7$, $R^8/R^9$, $R^{10}/R^{11}$ et/ou $R^{12}/R^{13}$ étant chaque fois liées les unes aux autres et, conjointement aux atomes de carbone auxquels elles sont liées, représentant un radical cycloalkyle en $C_4$-$C_{10}$ ou un radical cycloalcényle en $C_4$-$C_{10}$, qui de son côté peut être ponté par un radical $C(R^1,R^2)$, dans lequel $R^1$ et $R^2$ ont les significations données plus haut pour $R^1$ à $R^5$,

et la teneur en unités répétitives de la formule (I) dans le copolymère de cyclooléfine étant de 5 à 95% en mole et en unités répétitives de la formule (II) étant de 5 à 95% en mole.

**8.** Feuille suivant la revendication 7, caractérisée en ce que $R^1$, $R^2$, $R^3$, $R^4$ et $R^5$ signifient un hydrogène.

**9.** Feuille suivant l'une ou plusieurs des revendications 1 à 6, caractérisée en ce que le copolymère de cyclooléfine est préparé en utilisant un système de catalyseur à métallocène ponté.

**10.** Feuille suivant l'une ou plusieurs des revendications 1 à 9, caractérisée en ce que la température de transition vitreuse du copolymère de cyclooléfine se situe entre 50 et 250°C, de préférence entre 80 et 200°C.

**11.** Feuille suivant l'une ou plusieurs des revendications 1 à 10, caractérisée en ce qu'elle contient 0 à 2% en poids de particules inertes sur base du poids de la feuille.

**12.** Utilisation d'une feuille suivant l'une ou plusieurs des revendications 1 à 11, en tant que diélectrique pour condensateur.

**13.** Utilisation d'une feuille suivant l'une ou plusieurs des revendications 1 à 11, en tant qu'isolation électrique.

**14.** Utilisation d'une feuille suivant l'une ou plusieurs des revendications 1 à 11, en tant que feuille pour emballage.

**15.** Utilisation d'une feuille suivant l'une ou plusieurs des revendications 1 à 11, en tant que feuille de reproduction.

**16.** Utilisation d'une feuille suivant l'une ou plusieurs des revendications 1 à 11, en tant que fenêtre visuelle pour cellules LCD.

Fig. 1

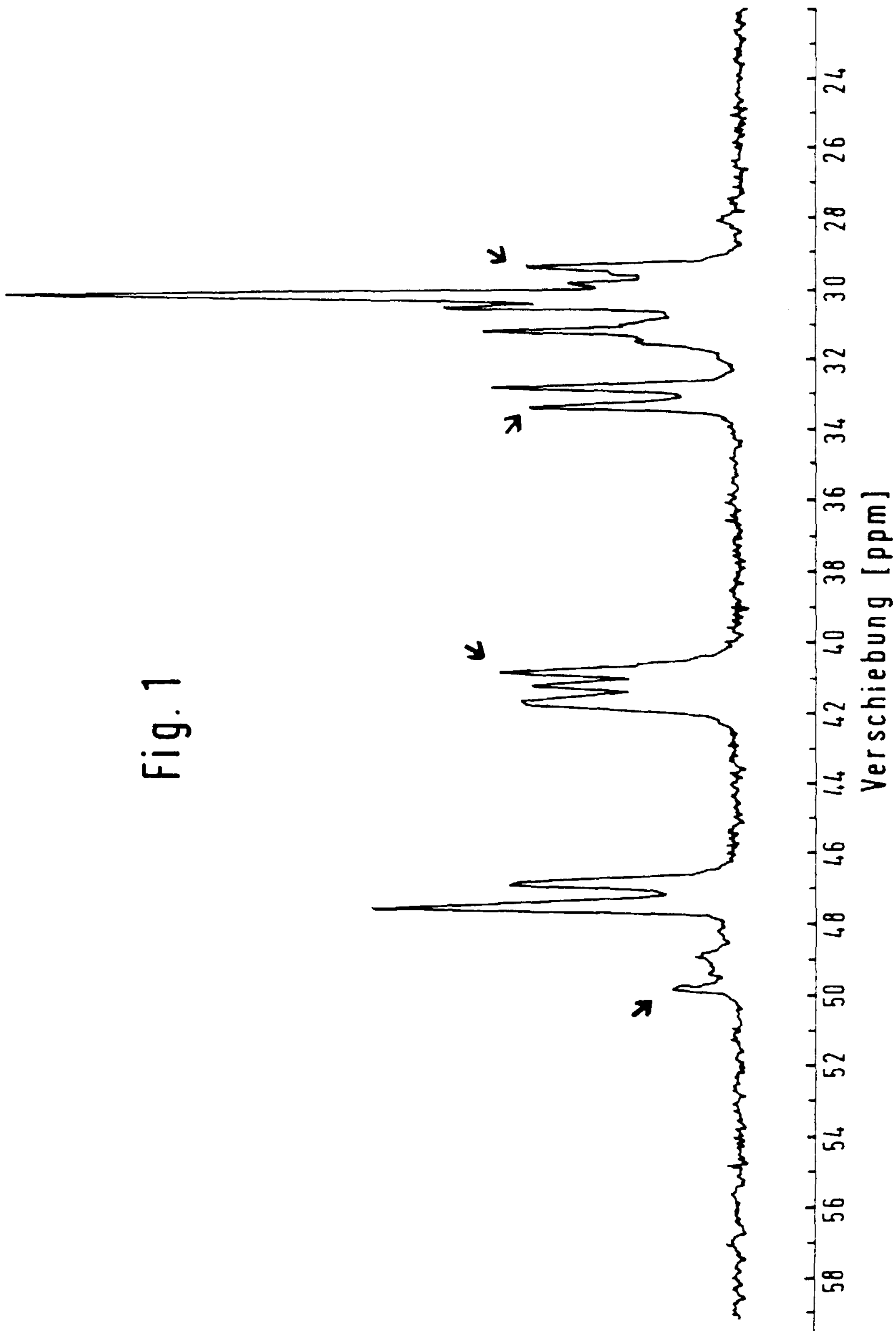
24
26
28
30
32
34
36
38
40
42
44
46
48
50
52
54
56
58
Verschiebung [ppm]

Fig. 2

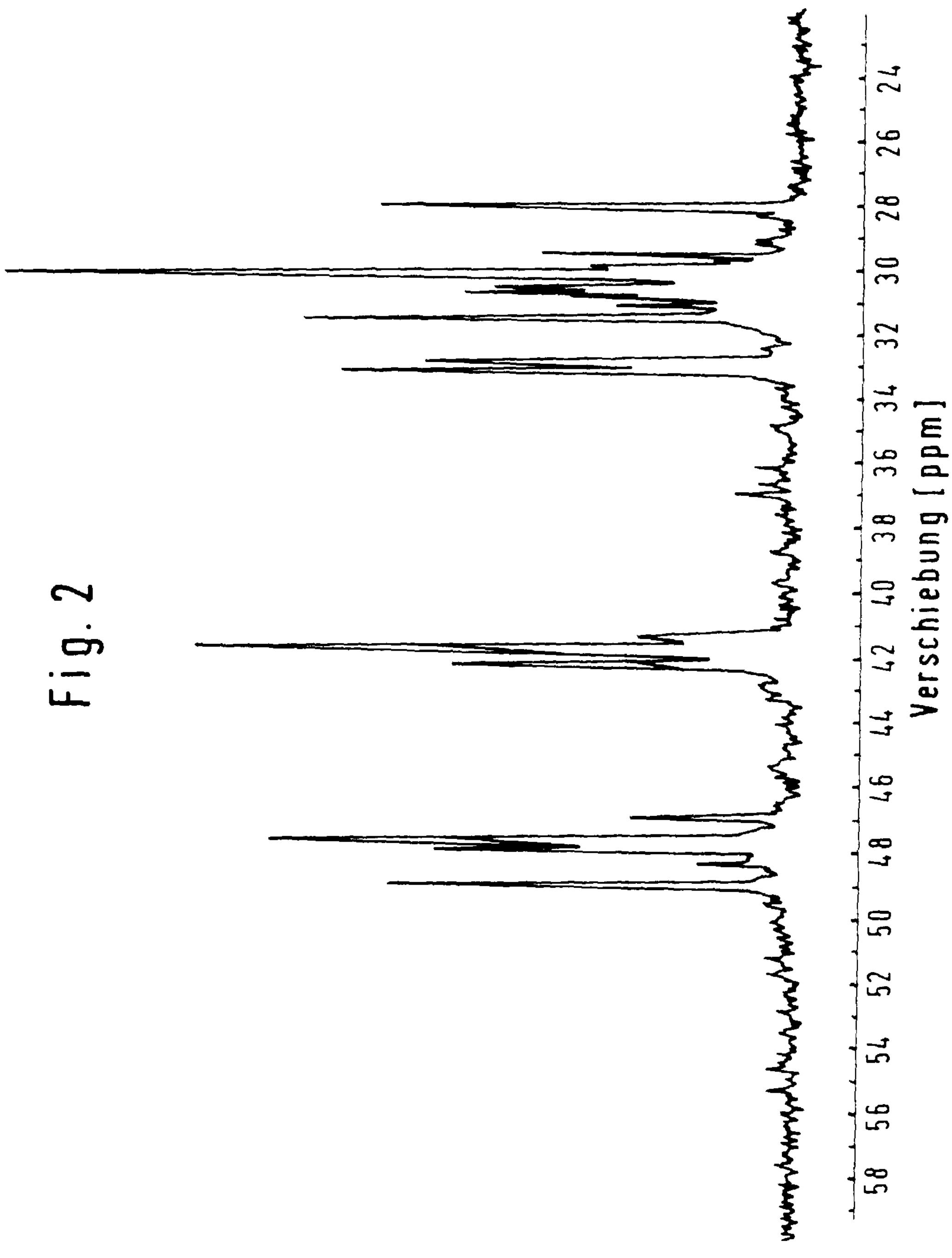
58
56
54
52
50
48
46
44
42
40
38
36
34
32
30
28
26
24
Verschiebung [ppm]

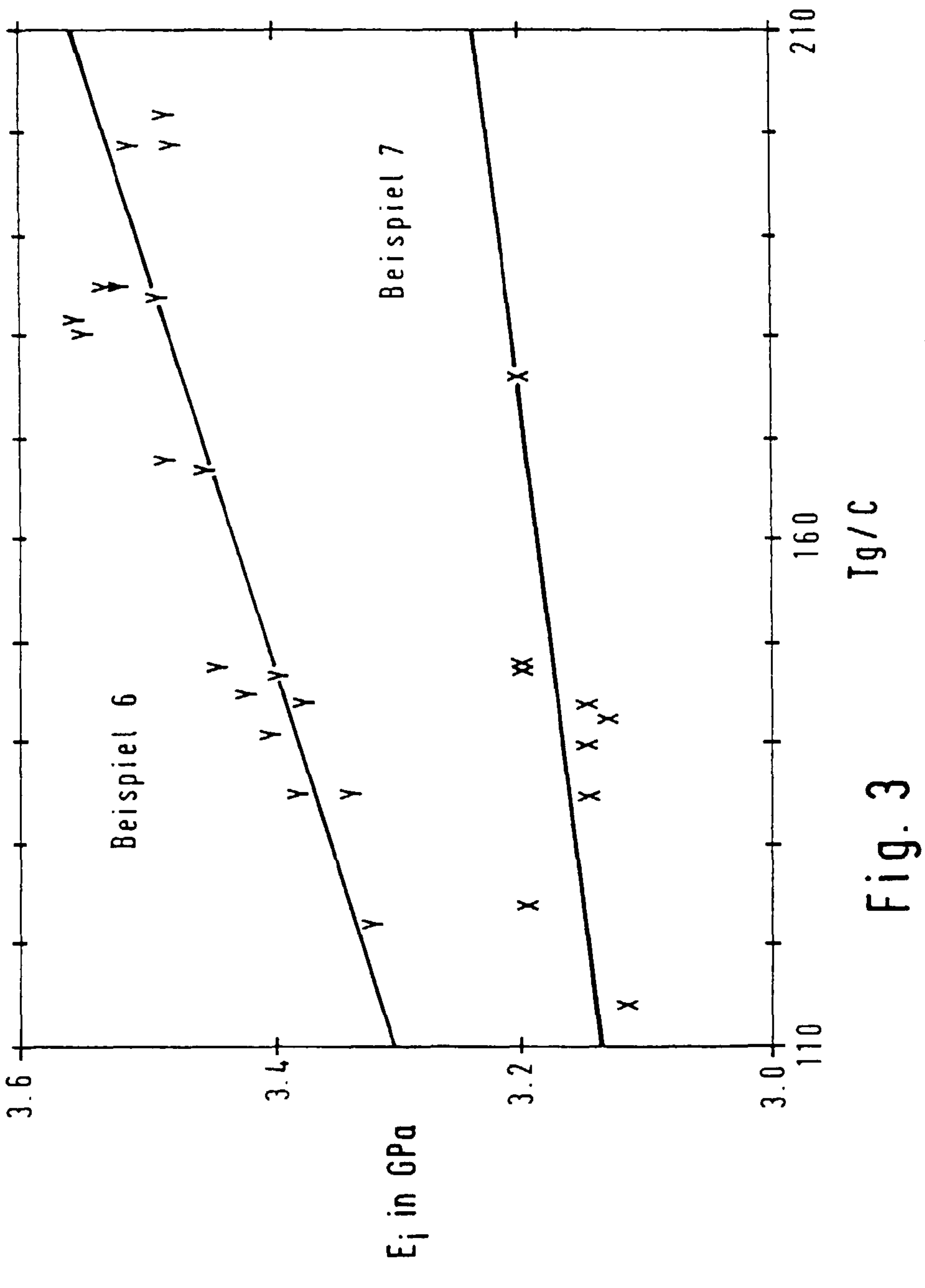


Fig. 3